# EUROPEAN PATENT SPECIFICATION

(11) **EP 2 325 963 B1**
(45) Date of publication and mention of the grant of the patent: **27.02.2013**
(21) Application number: 09176359.9
(22) Date of filing: 18.11.2009
(51) Int. Cl.: H01R 13/46, H02G 3/14, H02G 3/12, H01R 9/24

(54) **Electrical outlet with information carrier**
Elektrischer Austritt mit Informationsträger
Prise électrique dotée d'un support d'informations

(43) Date of publication of application: 25.05.2011
(73) Proprietor: Schneider Electric Danmark A/S, 2750 Ballerup (DK)
(72) Inventor: Jensen, Per, 2770, Kastrup (DK); Jensen, Rasmus Hybler, 2300, Copenhagen S (DK)
(74) Representative: Nielsen, Kim Garsdal

(56) References cited:
- EP-A1- 0 352 347
- EP-A2- 2 009 755
- US-A1- 2008 138 573

## Description

The present invention relates to an electrical outlet comprising at least one socket adapted to receive an electrical plug, said outlet comprising a main body part and a first surface extending essentially in a first plane, where said first surface comprises a window, and at least one opening through which said plug may be inserted into said socket so as to establish a desired electrical connection, and where said main body part comprises an information carrier allowing the provision of information relating to said desired electrical connection in said window, said information carrier comprises a movable member movable with respect to said main body part.

Electrical outlets come in many different variations, and the term is here to be construed in the broadest sense, covering *inter alia* electrical mains outlets, outlets for telephones and telecommunications, television, radio, audio etc. mounted in or on walls and as part of switch cabinets.

When many of such outlets are found close to another it may be necessary to be able to identify each particular one of them. An example could be outlets with RJ45 sockets used for Ethernet in office environments. In each office or meeting room there may be several outlets with RJ45 sockets located side by side mounted on or in a wall or in a cable duct, and all appearing visually identical. Some, however, may used for telephone or fax whereas others may be used for internal or external Ethernet communication. Which one does which depends on the actual cabling in the wall or duct, which in turn may depend on the configuration of patch cables between similarly identical outlets in a distribution cabinet located elsewhere. In either case the problem remains the same, each outlet needs to be marked so that it can be identified for use and/or in particular for service and re-patching in the future.

Prior art outlets with fields for marking, such as transparent windows, behind which, a piece of paper or the like, such as a DYMO® strip, on which the marking is written, may be placed, are known. Often, however, an adhesive label or a DYMO® strip is simply stuck on front of the outlet.

Such markings, however, are prone to getting unstuck over time, e.g. under the influence of water or the like from cleaning, as a result of excessive temperature affecting the adhesion, or as a result of deliberate peeling off by people who do not know better. Furthermore, such markings are also prone to fading of the written or printed text under the influence of light, in particular sunlight. In either of the above cases, the result is a loss of information. This loss of information is in particularly a problem, because after installation, the service or other occasion where the information is needed is often far in the future and no one, not even the technician who did the original the installation, will know the configuration -let alone his successor or an external technician.

From DE 0 352 347 is known an electrical outlet comprising an information carrier provided as a hinged flap for covering an opening through which a plug may be inserted to establish a desired electrical connection.

From DE 103 18 329 is known an electrical outlet with a plate shaped window in a front plate and a plate shaped information carrier adapted to be positioned in the window of the front plate. A further electrical outlet of this kind is known from US 2008/0138573, wherein information carrier comprises a slot for receiving a label prior to the positioning of the information carrier in a recess of a front plate.

Based on this, it is the object of the present invention to provide an electrical outlet, which overcome the above problem with potential loss of information.

According to the present invention this object is achieved with an electrical outlet according to the opening paragraph, wherein said information carrier is rotary movable about a first axis extending in parallel with said first plane so that the information may be hidden away.

Thereby the information may be hidden away out of reach of bleaching sunlight, external influences like water from cleaning, deliberate peeling of the labelling and many other influences, but still be accessible to the technician who needs the information. In this way the side with the marking may simply be turned into the outlet away from said light and other influences. Making the information carrier rotary movable, is particularly advantageous, because it does not take up more space on or behind the first surface than is actually necessary.

According to a further preferred embodiment, the information carrier is rotary movable through an angle between a first position and a second position. This allows the back of the information carrier to be flush with the first surface, while the information front side carrying the information is safely hidden and protected.

According to a further preferred embodiment said information carrier has means for retaining at least one of said first and second positions. This allows the information carrier to be held in a somewhat fixed position during labelling or while text is manually written thereon.

According to yet another embodiment, said detachable face plate comprises at least one removable cover adapted to cover said at least one socket. This allows the protection of sockets not in use, i.e. in which no plugs are inserted, against dust, dirt and the insertion of foreign objects.

According to a preferred embodiment, the socket is provided with a colour coding in a colour differing from said first surface. This allow for the immediate identification of the overall nature of the desired connection.

According to yet a further preferred embodiment, said information carrier is adapted to be released from said main body part and reengaged in said main body part after a rotation through 180 degrees about a second axis perpendicular to said first axis. This allows the information carrier to be reversed into the opposite orientation, which, in turn, allows for deactivation of said means for retaining the information carrier in position.

According to another embodiment, said electrical outlet comprises a detachable face plate. This allows the establishment of an essentially flush, flat surface constituting said first surface, while still making the access to the information carrier easy when labelling it. Moreover it visually hides the fact that the information carrier is releasable and helps to cover the immediate access to the them, thus rendering the appearance of the installation device better and unauthorised persons less likely to tamper with the information carrier, except of course turning it about the first axis.

The invention will now be described in greater detail based on non-limiting exemplary embodiments and with reference to the drawings, on which
Fig. 1 shows an exploded view of a first embodiment of an outlet according to the invention,
Fig. 2 shows an assembled view of the outlet of Fig. 2,
Fig. 3 shows a first cross section of the outlet of Fig. 2 taken along the line III-III,
Fig. 4 shows a second cross section of the outlet of Fig. 2 taken along the line IV-IV,
Fig. 5 shows a second embodiment of an outlet according to the invention,
Figs. 6a and 6b show a cross section of the outlet of Fig. 5 taken along the line VI-VI with the information carrier in two different positions,
Figs. 7a-7d illustrate how the information carrier of the outlet of Fig. 5 may be reversed, and
Fig. 8 shows a third embodiment of an outlet according to the invention.

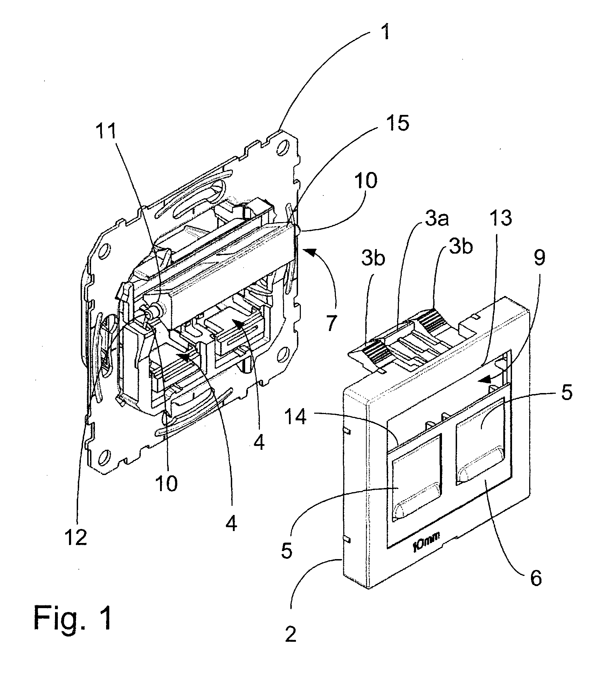

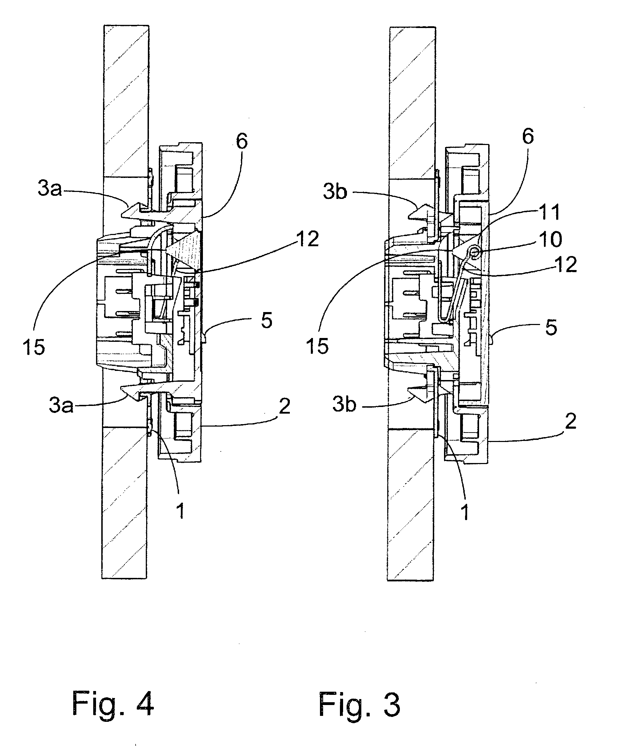

Figs. 1-4 show a first embodiment of an outlet according to the invention. Turning first to Fig. 1, an exploded view of a first embodiment of an outlet according to the invention is shown. The outlet comprises a main body part 1 and a detachable face plate 2 having an essentially plane first surface 6 extending in a first plane. The detachable face plate 2 may be attached to and detached from the main body part 1 by means of releasable latches 3a, 3b engaging appropriate parts of the main body part 1. The releasable latches 3b are provided with steps in order to control the depth of the engagement between the detachable face plate 2 and the main body part 1. The electrical outlet shown comprises two sockets 4 each adapted to receive an electrical plug (not shown), e.g. an RJ45 plug. The sockets 4 are accessible through appropriate openings in the detachable face place 2, after removal of removable covers 5, so as to allow a plug to be inserted into said socket 4 in order to establish a desired electrical connection. The removable covers 5 are optional, but useful in covering, and thus protecting, unused sockets 4 against intrusion of dust, dirt and the like as well as against damage from insertion of foreign objects. Moreover, the covers may be helpful in identifying, immediately and irrespective of any other labelling, sockets 4, which are not in use, i.e. not electrically connected to anything, and therefore are not capable of establishing said desired connection. Moreover, the covers 5 may carry an indication of the overall nature of desired connection for which the sockets are in use, e.g. by comprising a selected colour coding in a colour differing from the colour of said first surface.

Taking as an example the RJ45 plug mentioned above, such an RJ45 plug may be inserted into any one of a number of corresponding RJ45 sockets 4 with identical appearance such as the two shown in Fig. 1 but each one configured to different desired electrical connections. One could e.g. be configured as an ISDN telephone socket and the other as an Ethernet LAN socket, a possible third could be an Ethernet WAN socket and a possible fourth could be a redundant non-configured socket, as mentioned above. By the use of different indicators such as a colour or a symbol in relation to the socket these four types, i.e. the overall functionality, will be readily distinguishable.

However, for easy and full identification it is furthermore desirable to identify the different sockets 4 more precisely, e.g. by labelling them, so that finding exactly the correct desired connection through a trial-and-error process of repeated insertion and testing is avoided. That is to say, the labelling should reflect the configuration of patch cables between similarly identical outlets in a distribution cabinet located elsewhere. Evidently, these similar outlets in the distribution cabinet would bear corresponding labelling. As mentioned above such labelling should be stable and secure for long time periods, irrespective whether the outlet is mounted in a wall, in a cable duct, in a distribution cabinet or anywhere else where the information is needed.

For such labelling the outlet according to the invention comprises an information carrier 7. The information carrier 7 of Fig. 1 comprises an elongated member with a generally triangular cross section, with at least one surface 8 for holding the information. The surface 8 is preferably a flat surface for receiving a sticky label or adapted for being written directly on.

The information carrier 7 is movable with respect to said main body 1 part so that it may occupy at least a first position and a second position with respect to said main body 1. The first position being a position in which the at least one surface 8 extends essentially in parallel and preferably flush with said first surface 6 so as to allow the information provided on said at least one surface 8 to be visible in or through a window 9 provided in the first surface 6. The second position being a position in which the information provided on said at least one surface 8 faces away from the window 9 provided in the first surface 6, so as to render the information invisible and protect any labelling against external influences.

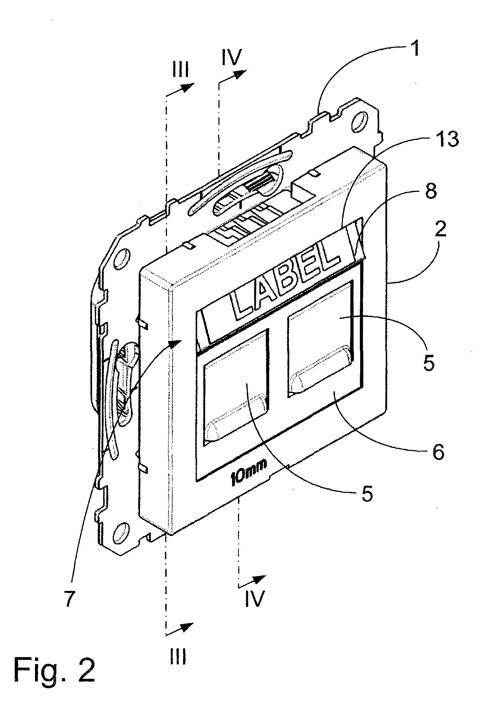

In the embodiment of Fig. 1, the information carrier 7 is movable between said first position and said second position by rotation about an axis A extending in parallel with said first surface. Fig. 2 shows the information carrier in process of being moved between these two positions. In the embodiment illustrated in Fig. 1, the information carrier 7 is journalled using two axle journals 10 located in corresponding bearings formed by loops 11 at the end of springs 12. The springs 12 bias the information carrier 7 into engagement with the upper edge 13 and the lower edge 14 of the window 9. Preferably the corners of the triangular profile of the information carrier 7 have been removed to form recesses 15 adapted to engage said upper edge 13 and said lower edge 14 of the window to maintain the information carrier 7 flush with said first surface 6 of the detachable face plate 2. This engagement further more fixes the information carrier 7 against rotation unless deliberately acted upon by applying an external force. The at least one surface 8 may thus be retained in a stationary position during attachment of a label or during manual writing of text thereon. Due to the springs 12 the information carrier 7 may be kept flush with respect to the first surface 6 and in engagement with the upper edge 13 and the lower edge 14 of the window 9 irrespective how deep the detachable face plate 2 is held in engagement with the main body part 1 by means of the releasable latches 3b.

The skilled person will realise that the illustrated bearings with loops 11 and springs 12 is only one possible embodiment, and that other bearings could be used instead, in particular but not exclusively those, which will be explained in conjunction with other preferred embodiments below.

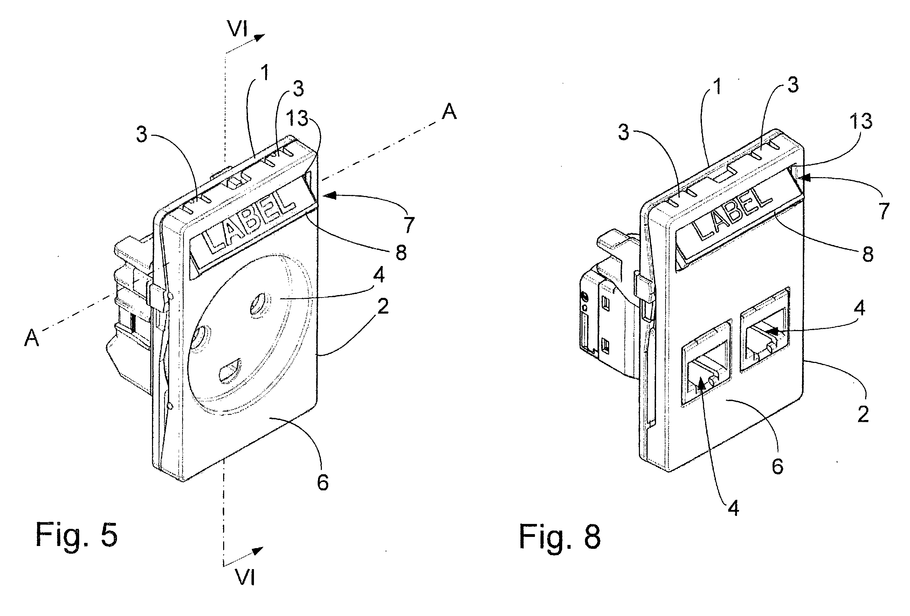

Figs. 5-7d illustrate a second embodiment of the invention, which will now be explained. To avoid unnecessary repetition, focus will be on the differences from the first embodiment of Figs. 1-4 and for that reason corresponding elements will be designated with the same reference numerals.

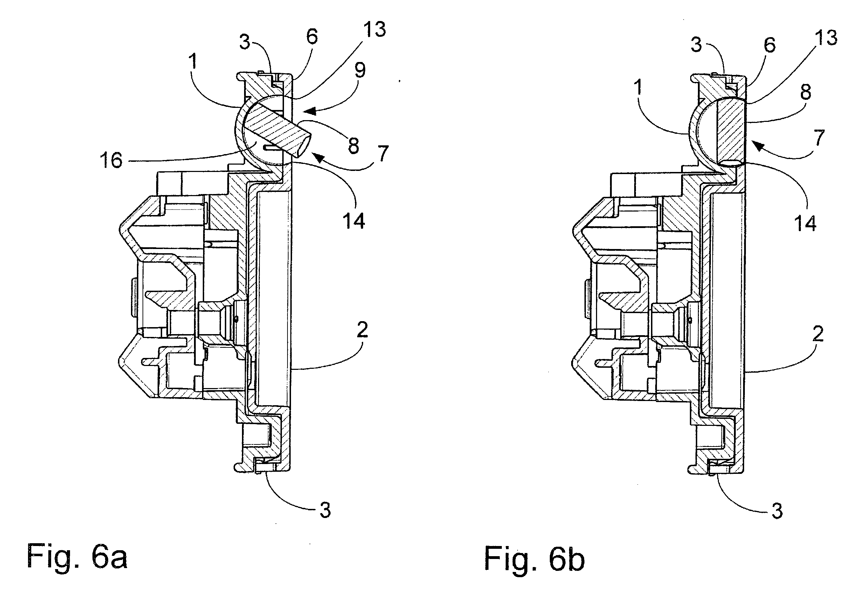

Looking first at Fig. 5, there is shown a mains outlet with a single socket 4 for receiving a three pronged single phase mains plug with semi-circular ground prong as commonly used in Denmark. Turning then to Figs. 6a, which is cross sectional view of the outlet of Fig. 5 taken along the line VI-VI of that figure, further differences that those relating directly to the nature of the outlet, i.e. mains vs. RJ45, will become apparent.

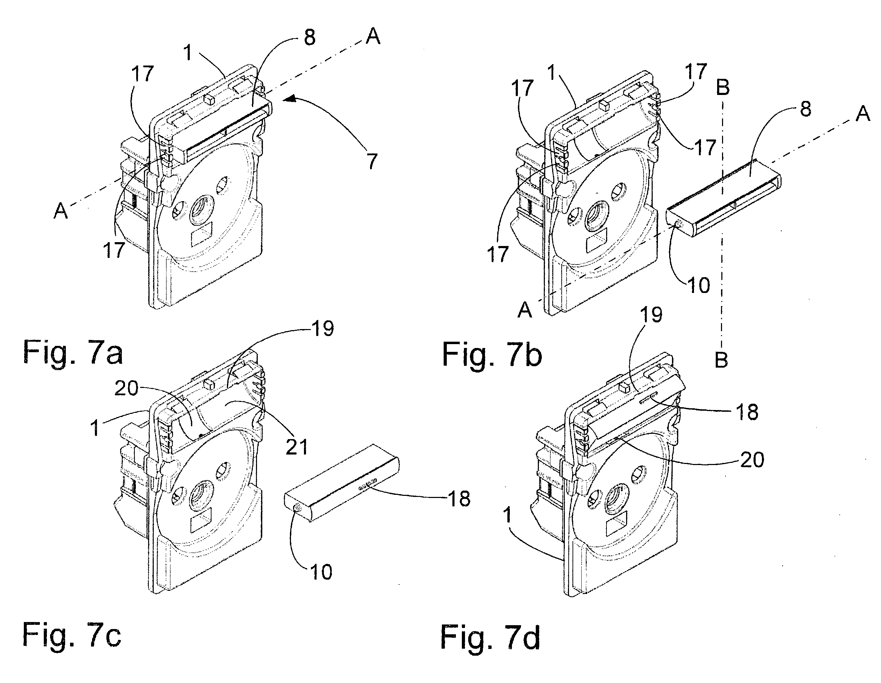

Looking at Fig. 6, it will *inter alia* be immediately apparent that rather than a triangular cross section, the information carrier 7 has two parallel sides, at lease one of which is a surface 8 for holding the information. The at least one surface 8 preferably being a flat surface for receiving a sticky label or adapted for being written directly on. The information carrier 7 is rotably journalled about a first axis A (see Fig. 7a) between a first position shown in Fig. 6b, and a second position (not shown), in which the information faces towards the main body part 1 in a cavity 16 and is not visible in the window 9. In that second position the information written on or attached to the at least one surface 8 is well protected against external influences in the cavity 16. Fig. 6a shows the information carrier 7 in an intermediate position in the process of being moved between said first position and said second position or vice versa. As can also be seen a detachable face plate 2 is attached to the main body part using latches 3 engaging appropriate counterparts on the main body part 1. The axis A is preferably located so that in either of the first and second positions the at least one surface 8 presented in the window 9 is flush with an essentially plane first surface 6 extending in a first plane.

Figs. 7a-7d show the outlet of Fig. 5 with the detachable face plate 2 removed. Here it can be seen that the information carrier 7 is preferably hollow with one or more cross sectional ribs for stability. This saves weight and material. As already mentioned, the information carrier 7 is rotably journalled about a first axis A, the first axis extending in parallel with said first surface 6. Like in the first embodiment the information carrier 7 is journalled using two axle journals 10 located in corresponding bearings. However, the bearings are formed between two spring arms 17, which are preferably provided as an integral part of the main body during moulding thereof. Unlike the first embodiment these spring arms 17 are not adapted to keep the at least one surface biased towards the window 9 in the face plate 2 and flush with the first surface 6. Instead, as can be seen from Fig. 7b and 7c, it allows the information carrier to be removed from the bearings formed between the spring arms 17 and turned 180 degrees about a second axis B perpendicular to the first axis A. Subsequently it may then be reinserted in the bearings formed between the spring arms 17 in a reverse orientation. This, in turn, allows for a relocation of the protrusion 18 seen in Figs. 7c and 7d with respect to a notch 19 and a groove 20 provided in the wall 21 of the cavity 16. This provides the option of locking the information carrier in a desired position. Thereby it also becomes optional which side of the information carrier should face inward when the information carrier 7 is retained in the first or second position. It should of course be noted that irrespective of the overall embodiment of the outlet, simple friction could also constitute a means for retaining the information carrier in a desired position.

This arrangement is also the reason why a removal face plate 2 is preferred over an integral, because the removable face plate 2 visually hides the spring arms 17 and helps to cover the immediate access to the them, thus rendering the appearance of the installation device better and unauthorised persons less likely to tamper with the information carrier 7, except of course turning it about the first axis A.

In Fig. 8 a third embodiment of the outlet according to the invention is shown. The third embodiment essentially only differs from that of Fig. 5 in that the outlet is adapted for RJ45 sockets and not mains. Fig. 8 thus serves to illustrate that features are freely interchangeable between various embodiments, at that the invention is not limited to use with specific sockets.

It should also be noted that the detachable face plate 2 is only optional. Without deviation from the gist of the invention, the first surface 6 extending in a first plane could just as well be formed as an integral part of the main body.

## Claims

1. An electrical outlet comprising at least one socket (4) adapted to receive an electrical plug,
said outlet comprising a main body (1) part and a first surface (6) extending essentially in a first plane, where
said first surface (6) comprises a window (9), and at least one opening through which said plug may be inserted into said socket (4) so as to establish a desired electrical connection, and where
said main body (1) part comprises an information carrier allowing (7) the provision of information relating to said desired electrical connection in said window (9),
said information carrier (7) comprises a movable member movable with respect to said main body part (1), **characterized in that**
said information carrier (7) is rotary movable about a first axis (A) extending in parallel with said first plane so that the information may be hidden away.

2. An electrical outlet according to claim 1, wherein said information carrier (7) is rotary movable through an angle between a first position and a second position.

3. An electrical outlet according to claim 2, wherein said information carrier (7) has means (15, 18) for retaining at least one of said first and second positions.

4. An electrical outlet according to claim 3, wherein said detachable face plate (2) comprises at least one removable cover (5) adapted to cover said at least one socket (4).

5. An electrical outlet according to any one of claims 1-4, wherein said information carrier (7) is adapted to be released from said main body part (1) and reengaged in said main body part (1) after a rotation through 180 degrees about a second axis (B) perpendicular to said first axis (A).

6. An electrical outlet according to any one of the preceding claims comprising a detachable face plate (2).

## Patentansprüche

1. Steckdose, umfassend mindestens eine Anschlussbuchse (4), die zur Aufnahme eines elektrischen Steckers ausgeführt ist,
wobei die Steckdose einen Hauptkörperteil (1) und eine sich im Wesentlichen in einer ersten Ebene erstreckende erste Fläche (6) umfasst, wobei
die erste Fläche (6) ein Fenster (9) und mindestens eine Öffnung, durch die der Stecker in die Anschlussbuchse (4) eingeführt werden kann, um eine gewünschte elektrische Verbindung herzustellen, umfasst, und wobei
der Hauptkörperteil (1) einen Informationsträger (7) umfasst, der das Bereitstellen von Informationen, die die gewünschte elektrische Verbindung in dem Fenster (9) betreffen, gestattet,
wobei der Informationsträger (7) ein bewegliches Glied umfasst, das bezüglich des Hauptkörperteils (1) beweglich ist, **dadurch gekennzeichnet, dass**
der Informationsträger (7) um eine parallel zu der ersten Ebene verlaufende erste Achse (A) drehbeweglich ist, so dass die Informationen verborgen werden können.

2. Steckdose nach Anspruch 1, wobei der Informationsträger (7) um einen Winkel zwischen einer ersten Stellung und einer zweiten Stellung drehbeweglich ist.

3. Steckdose nach Anspruch 2, wobei der Informationsträger (7) Mittel (15, 18) zum Halten der ersten und/oder zweiten Stellung aufweist.

4. Steckdose nach Anspruch 3, wobei die abtrennbare Frontplatte (2) mindestens eine abnehmbare Abdeckung (5) umfasst, die zum Abdecken der mindestens einen Anschlussbuchse (4) ausgeführt ist.

5. Steckdose nach einem der Ansprüche 1 - 4, wobei der Informationsträger (7) dazu ausgeführt ist, aus dem Hauptkörperteil (1) freigegeben zu werden und nach einer Drehung um 180 Grad um eine zweite Achse (B), die senkrecht zu der ersten Achse (A) verläuft, wieder mit dem Hauptkörperteil (1) in Eingriff gebracht zu werden.

6. Steckdose nach einem der vorhergehenden Ansprüche, die eine abtrennbare Frontplatte (2) umfasst.

## Revendications

1. Prise électrique comprenant au moins une embase (4) prévue pour recevoir une fiche électrique,
ladite prise comprenant une partie de corps principal (1) et une première surface (6) s'étendant essentiellement dans un premier plan,
ladite première surface (6) comprenant une fenêtre (9) et au moins une ouverture à travers laquelle ladite fiche peut être insérée dans ladite embase (4) de manière à établir une connexion électrique souhaitée, et
ladite partie de corps principal (1) comprenant un support d'information (7) permettant la fourniture d'information concernant ladite connexion électrique souhaitée dans ladite fenêtre (9),
ledit support d'information (7) comprenant un organe déplaçable, pouvant être déplacé par rapport à ladite partie de corps principal (1), **caractérisée en ce que**
ledit support d'information (7) est déplaçable en rotation autour d'un premier axe (A) s'étendant parallèlement audit premier plan de telle sorte que l'information puisse être dissimulée.

2. Prise électrique selon la revendication 1, dans laquelle ledit support d'information (7) est déplaçable en rotation suivant un angle entre une première position et une deuxième position.

3. Prise électrique selon la revendication 2, dans laquelle ledit support d'information (7) a un moyen (15, 18) pour retenir au moins l'une desdites première et deuxième positions.

4. Prise électrique selon la revendication 3, dans laquelle ladite plaque frontale détachable (2) comprend au moins un couvercle amovible (5) prévu pour couvrir ladite au moins une embase (4).

5. Prise électrique selon l'une quelconque des revendications 1 à 4, dans laquelle ledit support d'information (7) est prévu pour être libéré de ladite partie de corps principal (1) et ré-engagé dans ladite partie de corps principal (1) après une rotation de 180 degrés autour d'un second axe (B) perpendiculaire audit premier axe (A).

6. Prise électrique selon l'une quelconque des revendications précédentes, comprenant une plaque frontale détachable (2).
